(19) Europäisches Patentamt
European Patent Office
Office européen des brevets

(11) **EP 4 076 702 B1**

(12) # FASCICULE DE BREVET EUROPEEN

(45) Date de publication et mention de la délivrance du brevet:
**12.11.2025 Bulletin 2025/46**

(21) Numéro de dépôt: **20815821.2**

(22) Date de dépôt: **01.12.2020**

(51) Classification Internationale des Brevets (IPC):
***B01D 53/14** (2006.01)*

(52) Classification Coopérative des Brevets (CPC):
**B01D 53/1493; B01D 53/1462;** B01D 2252/20415; B01D 2252/20431; B01D 2252/20447; B01D 2252/20489; B01D 2252/504; B01D 2256/24; B01D 2256/245; B01D 2257/30; B01D 2257/302; B01D 2257/304; B01D 2257/306; B01D 2257/308; B01D 2257/504; (Cont.)

(86) Numéro de dépôt international:
**PCT/EP2020/084178**

(87) Numéro de publication internationale:
**WO 2021/121983 (24.06.2021 Gazette 2021/25)**

(54) **PROCEDE D'ÉLIMINATION DE COMPOSES ACIDES D'UN EFFLUENT GAZEUX AVEC UNE SOLUTION ABSORBANTE D'AMINES TERTIAIRES**

VERFAHREN ZUR ENTFERNUNG VON SÄUREVERBINDUNGEN AUS EINEM ABGAS ANHAND EINER ABSORBIERENDEN LÖSUNG AUF TERTIÄRAMINBASIS

METHOD FOR REMOVING ACID COMPOUNDS FROM A GASEOUS EFFLUENT USING A TERTIARY AMINE-BASED ABSORBENT SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019 FR 1914512**

(43) Date de publication de la demande:
**26.10.2022 Bulletin 2022/43**


(73) Titulaire: **IFP Energies nouvelles**
**92852 Rueil-Malmaison Cedex (FR)**

(72) Inventeurs:
- **GRANDJEAN, Julien**
  **92852 RUEIL-MALMAISON CEDEX (FR)**
- **HUARD, Thierry**
  **92852 RUEIL-MALMAISON CEDEX (FR)**
- **WENDER, Aurélie**
  **92852 RUEIL-MALMAISON CEDEX (FR)**
- **GROSJEAN, François**
  **92852 RUEIL-MALMAISON CEDEX (FR)**
- **KITTEL, Jean**
  **92852 RUEIL-MALMAISON CEDEX (FR)**
- **LETTAT, Abdelkader**
  **92852 RUEIL-MALMAISON CEDEX (FR)**
- **DEHLINGER, Marie**
  **92852 RUEIL-MALMAISON CEDEX (FR)**
- **MOURET, Aurélie**
  **92852 RUEIL-MALMAISON CEDEX (FR)**
- **COURTIAL, Xavier**
  **92500 RUEIL-MALMAISON (FR)**

(74) Mandataire: **IFP Energies nouvelles**
**Département Propriété Industrielle**
**Rond Point de l'échangeur de Solaize**
**BP3**
**69360 Solaize (FR)**


(56) Documents cités:
**EP-A1- 4 010 106**
**WO-A1-2004/082809**
**WO-A1-2015/177333**
**WO-A1-2021/023588**
**FR-A1- 2 900 843**


Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).





**(Cont. page suivante)**

(52) Classification Coopérative des Brevets (CPC):
(Cont.)B01D 2258/02; B01D 2258/0233;
B01D 2258/0283; B01D 2258/0291; B01D 2258/05;
Y02C 20/40; Y02E 50/30

## Description

### Domaine technique

La présente invention concerne le domaine des procédés de désacidification d'un effluent gazeux. L'invention s'applique avantageusement au traitement de gaz d'origine industrielle, du gaz naturel et du gaz issu de fermentation de biomasse.

### Technique antérieure

On utilise couramment des procédés de désacidification de gaz mettant en œuvre des solutions aqueuses d'amines pour retirer les composés acides présents dans un gaz, notamment le dioxyde de carbone ($CO_2$), l'hydrogène sulfuré ($H_2S$), l'oxysulfure de carbone (COS), le disulfure de carbone ($CS_2$), le dioxyde de soufre ($SO_2$) et les mercaptans (RSH) tel que le méthylmercaptan ($CH_3SH$), l'éthylmercaptan ($CH_3CH_2SH$) et le propylmercaptan ($CH_3CH_2CH_2SH$). Le gaz est désacidifié par mise en contact avec la solution absorbante, puis la solution absorbante est régénérée thermiquement.

Ces procédés de désacidification de gaz acides sont aussi communément appelés "lavage aux solvants" avec un solvant dit "chimique", par opposition à l'utilisation solvant dit "physique" pour l'absorption qui n'est pas basée sur la réalisation de réactions chimiques mais sur la solubilité directement dépendante et proportionnelle à la pression partielle des espèces en phase gazeuse. La pression partielle est le produit de la concentration des espèces dans la phase multiplié par la pression totale opératoire. Un solvant dit « chimique » bénéficie avantageusement des deux effets pour augmenter la solubilité des espèces.

Un solvant chimique correspond à une solution aqueuse comprenant un réactif qui réagit préférentiellement avec les composés acides ($H_2S$, $CO_2$, COS, $CS_2$, etc.) présents dans le gaz traité pour former des sels, sans réagir avec les autres composés non acides du gaz. Le gaz traité après mise en contact avec le solvant est alors appauvri en composés acides, lesquels sont sélectivement transférés sous forme de sels dans le solvant. Les réactions chimiques sont réversibles, ce qui permet au solvant chargé en composés acides d'être ensuite désacidifié, par exemple sous l'action de la chaleur, pour libérer d'une part les composés acides sous forme de gaz, qui peuvent alors être stockés, transformés ou être utilisés pour diverses applications, et pour d'autre part régénérer le solvant qui retourne à son état initial et peut ainsi être réutilisé pour une nouvelle phase de réaction avec le gaz acide à traiter. La phase de réaction du solvant avec le gaz acide est communément appelée la phase d'absorption, et celle où le solvant est désacidifié est appelée la phase de régénération du solvant.

En général, les performances de la séparation des composés acides du gaz, dans ce contexte, dépendent principalement de la nature de la réaction réversible choisie. Les procédés conventionnels de désacidification de gaz acides sont généralement des procédés dits "aux amines", c'est à dire qu'ils reposent sur les réactions des composés acides avec des amines en solution aqueuse. Ces réactions entrent dans le cadre général des réactions acido-basiques. L'$H_2S$, le $CO_2$, ou le COS sont par exemple des composés acides, notamment en présence d'eau, alors que les amines sont des composés basiques. Les mécanismes des réactions et la nature des sels obtenus dépendent généralement de la structure des amines mises en œuvre.

Par exemple le document US6852144 décrit une méthode d'élimination des composés acides des hydrocarbures utilisant une solution absorbante aqueuse de N-méthyldiéthanolamine (MDEA) ou de triéthanolamine contenant une forte proportion d'au moins un composé appartenant au groupe suivant : pipérazine et/ou méthylpipérazine et/ou morpholine.

Les performances des procédés de désacidification de gaz acides par lavage aux amines sont directement dépendantes de la nature de la ou des amines présentes dans le solvant. Ces amines peuvent être primaires, secondaires ou tertiaires. Elles peuvent présenter une ou plusieurs fonctions amines équivalentes ou différentes par molécule.

Afin d'améliorer les performances des procédés de désacidification, il est continuellement recherché des amines toujours plus performantes, notamment capables d'absorber une quantité plus importante de gaz acides et d'être régénérées avec moins d'énergie.

Une limitation des solutions absorbantes couramment utilisées dans des applications de désacidification dite « sélective » est une sélectivité insuffisante d'absorption de l'$H_2S$ par rapport au $CO_2$. En effet, dans certains cas de désacidification du gaz naturel, on recherche une élimination sélective de l'$H_2S$ en limitant au maximum l'absorption du $CO_2$. Cette contrainte est particulièrement importante pour des gaz à traiter contenant déjà une teneur en $CO_2$ inférieure ou égale à la spécification désirée. On recherche alors une capacité d'absorption de $H_2S$ maximale avec une sélectivité maximale d'absorption de $H_2S$ vis-à-vis du $CO_2$. Cette sélectivité permet de maximiser la quantité de gaz traité et de récupérer un gaz acide en sortie de régénérateur ayant une concentration la plus élevée possible en $H_2S$, ce qui limite la taille des unités de la chaîne soufre en aval du traitement et garantit un meilleur fonctionnement de celles-ci. Dans certains cas, une unité d'enrichissement en $H_2S$ est nécessaire pour concentrer en $H_2S$ le gaz acide. Sur ce type d'unités de lavage

aux amines installées pour traiter le gaz acide, on recherche également l'amine la plus sélective.

Il est bien connu que les amines tertiaires ou les amines secondaires avec un encombrement stérique sévère ont une cinétique de captage du $CO_2$ plus lente que des amines primaires ou secondaires peu encombrées. En revanche, les amines, et notamment les amines tertiaires ou secondaires avec un encombrement stérique sévère, ont généralement une cinétique de captage de l'$H_2S$ instantanée. Par conséquent il est possible de réaliser avec ces amines tertiaires et secondaires avec un encombrement stérique sévère une élimination sélective de l'$H_2S$ basée sur des performances cinétiques distinctes.

Des amines tertiaires, comme la MDEA, ou des amines secondaires encombrées présentant une cinétique de réaction lente avec le $CO_2$ sont ainsi couramment utilisées. Cependant, elles présentent des sélectivités limitées à des taux de charge en gaz acides élevés.

Une autre limitation de nombreuses solutions absorbantes couramment utilisées dans des applications de désacidification totale est une cinétique d'absorption du $CO_2$ ou du COS trop lente. Dans le cas où les spécifications désirées sur le $CO_2$ ou en COS sont très poussées, i.e. proches de l'épuration totale en ces composés, on recherche généralement une cinétique de réaction la plus rapide possible de manière à réduire la hauteur de la colonne d'absorption. En effet, si les réactions sont lentes, il doit être envisagé d'utiliser des colonnes de grande hauteur pour laisser suffisamment de temps à la réaction chimique de se réaliser. Or, les colonnes d'absorption représentent une part importante des coûts d'investissements du procédé, notamment quand il s'agit d'équipements sous pression.

Que l'on recherche une cinétique d'absorption du $CO_2$ et du COS maximale dans une application désacidification totale de tous les contaminants acides, ou une cinétique de captage du $CO_2$ minimale dans une application de désacidification sélective (absorption sélective de l'$H_2S$ par rapport au $CO_2$), on désire toujours utiliser une solution absorbante ayant la capacité cyclique la plus grande possible sur les contaminants que l'on cherche à éliminer de l'effluent gazeux traité, e.g. du gaz naturel. Cette capacité cyclique, notée $\Delta\alpha$ correspond à la différence de taux de charge ($\alpha$ désignant le nombre de mole de composés acides absorbés $n_{gaz\ acide}$ par kilogramme de solution absorbante) entre la solution absorbante soutirée en fond de la colonne d'absorption et la solution absorbante alimentant ladite colonne. En effet, plus la solution absorbante a une forte capacité cyclique, plus le débit de solution absorbante qu'il faut mettre en œuvre pour désacidifier de gaz à traiter est restreint. Dans les procédés de traitement de gaz, la réduction du débit de solution absorbante a également un fort impact sur la réduction des investissements, notamment au niveau du dimensionnement des colonnes si l'on peut en réduire leur diamètre, mais également en réduisant la taille des autres équipements tels que les échangeurs de chaleur, pompes et ballons de flash.

Un autre aspect primordial des opérations de traitement de gaz ou nettoyage de fumées industrielles par solvant reste la régénération de l'agent de séparation pour épurer le solvant des contaminants qu'il a accumulé dans la phase d'absorption. En fonction du type d'absorption (physique et/ou chimique), on envisage généralement une régénération par détente, et/ou par distillation et/ou par entraînement par un gaz vaporisé appelé "gaz de stripage". La consommation énergétique nécessaire à la régénération du solvant peut être très importante, ce qui est particulièrement vrai dans le cas où la pression partielle de gaz acides est faible, ou lorsque les forces de liaisons chimiques sont importantes, et représenter un coût opératoire considérable pour le procédé de désacidification.

Il est bien connu de l'homme du métier que l'énergie nécessaire à la régénération par distillation d'une solution d'amine peut se décomposer selon trois postes différents : l'énergie nécessaire pour réchauffer la solution absorbante entre la tête et le fond du régénérateur, l'énergie nécessaire pour abaisser la pression partielle de gaz acides dans le régénérateur par vaporisation d'un gaz de stripage, et enfin l'énergie nécessaire pour casser la liaison chimique entre l'amine et le composé acide. Ces deux premiers postes sont proportionnels aux débits de solution absorbante qu'il est nécessaire de faire circuler dans l'unité pour réaliser une performance d'épuration, i.e une spécification, donnée du solvant à régénérer. Pour diminuer la consommation énergétique associée à la régénération du solvant, il est donc préférable encore une fois de maximiser la capacité cyclique du solvant. En effet, plus la solution absorbante a une forte capacité cyclique, plus le débit de solution absorbante qu'il faut mettre en œuvre pour désacidifier de gaz à traiter peut être restreint.

Dans la recherche d'amines plus performantes permettant de réduire le débit de circulation et l'énergie de régénération, le brevet US6267939 et la demande de brevet WO09156273 proposent une solution absorbante à base de polyamines particulières, tel que la N,N,N',N'-Tétraméthyldipropylènetriamine (TMDPTA) ou la pentaméthyldiéthylènetriamine (PMDETA).

Dans le but également de réduire l'énergie de régénération du procédé de désacidification, les documents FR2877858, FR2895273, FR2900843, FR2898284, FR2900842, FR2986441 et FR2986442 proposent d'utiliser une solution absorbante qui forme deux phases lorsqu'elle absorbe une quantité de gaz acides, de telle sorte que seule la phase chargée avec les gaz acides nécessite une régénération. Cette solution comporte cependant l'inconvénient de ne pas être compatible avec une installation de désacidification conventionnelle à haute pression car elle nécessite des étapes et des équipements supplémentaires et de multiples précautions pour maintenir l'opération sous contrôle. En effet, la séparation en deux phases liquides d'une solution absorbante liquide monophasique, aussi appelé phénomène de démixtion, peut causer des problèmes opératoires sérieux lors de l'absorption ou à plus haute température, en amont ou

lors de l'étape de régénération si le procédé et les équipements ne sont pas adaptés pour traiter les deux phases. Ces problèmes sont notamment décrits dans les documents FR3014101 et WO2015177333. Dans les conditions opératoires de l'absorbeur, aussi appelé colonne d'absorption, cette séparation de phase liquide-liquide peut perturber le transfert du gaz acide vers la solution absorbante et rendre la colonne instable. Elle peut également perturber l'équilibre de phase liquide-vapeur qui est très important pour la performance du cycle de désacidification, en particulier pour l'étape de régénération. Elle peut en outre causer des changements soudains dans la composition des flux liquides, des écoulements irréguliers tels que le procédé devient instable, son contrôle impossible et sa performance aléatoire.

Un autre problème réside dans la stabilité de la solution absorbante, notamment la stabilité thermique des amines. La solution absorbante peut se dégrader sous l'effet de la température, ce qui limite les conditions de fonctionnement du procédé, notamment la température à laquelle est réalisée la régénération du solvant. A titre d'exemple, augmenter la température du régénérateur de 10°C multiplie par deux la vitesse de dégradation thermique de la monoethanolamine (MEA). La régénération des solutions aqueuses d'alcanolamines, comme la MEA est donc réalisée à des températures en fond de régénérateur de l'ordre de 120°C, voir 130°C pour les amines plus stables, comme la MDEA. Du fait de ces températures en fond de régénérateur, les gaz acides ($CO_2$, $H_2S$, COS, $CS_2$, etc.) sont obtenus à des pressions modérées, de 0,1 à 0,3 MPa. Suivant la nature du gaz acide régénéré et les applications, le gaz acide peut être envoyé vers une unité de traitement, ou bien comprimé pour être réinjecté et séquestré. En vue de notamment de surmonter ce problème de stabilité thermique, la demande de brevet WO04082809 propose par exemple l'utilisation de solutions absorbantes aqueuses comportant une forte concentration, typiquement supérieure à 60%, d'une polyamine tertiaire, par exemple la pentaméthyldipropylènetriamine (PMDPTA).

D'autres problèmes encore sont couramment rencontrés, tels que la corrosivité des solutions absorbantes ou encore le moussage des solutions absorbantes.

Les solutions absorbantes à base d'amines, par exemple à base d'alcanolamines telles que la MEA, la diéthanolamine (DEA) ou la MDEA sont en effet connues pour être corrosives vis-à-vis des équipements en acier utilisés dans les procédés de désacidification d'effluents gazeux. Ces risques de corrosion imposent de prendre des mesures assez contraignantes, comme par exemple la réalisation d'équipements en alliages résistants à la corrosion, pouvant être plus onéreux ou moins résistants mécaniquement, ou l'emploi d'additifs anti-corrosion qui ajoutent au coût de la solution, s'accumulent de manière irréversible et potentiellement encrassants et dont il convient de surveiller en continu la présence aux bonnes teneurs.

Le moussage des solutions absorbantes est un problème connu dans la désacidification d'effluents gazeux, pouvant avoir différentes conséquences néfastes, comme un engorgement précoce des colonnes d'absorption ou de régénération conduisant à une baisse de la capacité de production, un gaz traité en dehors des spécifications visées, des pertes d'amines par entrainement dans le gaz traité ou le gaz acide, voire à un arrêt de l'unité. On sait que les solutions absorbantes aux amines ont tendance à mousser, notamment lorsqu'elles sont en contact avec des hydrocarbures liquides. Ce problème est souvent solutionné par l'addition d'agents anti-moussage, qui encore une fois, augmentent les coûts opératoires et complexifient le procédé (nécessité de surveiller la teneur, ajout de filtres, etc.).

Dans ce contexte, il est difficile de trouver une formulation de composés absorbants permettant d'éliminer les composés acides dans tout type d'effluent, permettant au procédé de désacidification de fonctionner à moindres coûts opératoires (dont l'énergie de régénération) et d'investissements (dont le coût de la colonne d'absorption), et qui satisfassent aux exigences de capacité d'absorption, de sélectivité, de stabilité chimique, notamment à la température, de faible corrosivité et limitant le moussage.

Il est par ailleurs connu du brevet EP-4 010 106 un procédé d'élimination des composés acides contenus dans un effluent gazeux, dans lequel on effectue une étape d'adsorption desdits composés acides par mise en contact de l'effluent gazeux avec une solution adsorbante comportant un mélange d'une polyamine tertiaire, d'une amine tertiaire et d'une polyamine secondaire, tel qu'un mélange de pentaméthyldipropylènetriamine PMDPTA, de N-methyldiéthanoamine MDEA et de pipérazine.

### Objectifs et Résumé de l'invention

La présente invention a donc pour objectif de répondre aux besoins de l'art antérieur et de pallier un ou plusieurs des inconvénients de l'art antérieur ci-dessus mentionnés.

La présente invention propose ainsi un procédé pour éliminer les composés acides, tels que le $CO_2$, l'$H_2S$, le COS, le $CS_2$, les mercaptans, d'un gaz mettant en œuvre une solution absorbante aqueuse comprenant la combinaison particulière d'au moins deux amines spécifiques, qui présente, de manière inattendue, au moins l'un des effets suivants :

- une plus grande résilience au moussage par rapport aux solutions traditionnelles, notamment en présence d'hydrocarbures et dans des conditions dégradées telles que celle des unités en opération ;
- une moindre corrosivité par rapport aux solutions traditionnelles ;
- une plus grande stabilité, i.e. une dégradation moindre, notamment en présence de dioxygène, par rapport à des

solutions absorbantes à base de polyamines selon l'art antérieur.

En outre, les inventeurs ont mis en évidence que l'utilisation de cette combinaison particulière d'amines spécifiques en solution aqueuse, avec un activateur tel que la pipérazine, peut améliorer la capacité cyclique d'absorption et la cinétique d'absorption du $CO_2$ par rapport à une formulation de référence telle qu'un mélange de MDEA et de pipérazine.

Les solutions absorbantes utilisées dans le procédé selon l'invention peuvent également permettre de limiter le débit de solution absorbante à utiliser dans le procédé, du fait des bonnes performances en termes de capacité cyclique d'absorption des gaz acides, notamment $CO_2$ et $H_2S$, et de sélectivité d'absorption vis-à-vis de l'$H_2S$. Ces performances sont supérieures à celles de la MDEA, et également à celles de polyamines citées dans l'art antérieur, et notamment pour ces dernières en termes de capacité cyclique d'absorption des gaz acides. Selon la présente invention, la solution absorbante est avantageusement sous une forme monophasique dans les conditions opératoires du procédé, plus particulièrement au moins dans les conditions d'absorption et jusqu'à l'entrée de la solution dans le régénérateur, ce qui permet notamment de s'affranchir d'une étape de décantation post-absorption.

Ainsi, la présente invention propose, selon un premier aspect, un procédé d'élimination des composés acides contenus dans un effluent gazeux dans lequel on effectue une étape d'absorption des composés acides par mise en contact de l'effluent gazeux avec une solution absorbante comportant :

- de l'eau ;
- entre 20% et 28% poids de pentaméthyldipropylènetriamine ;
- entre 5% et 35% poids de N-méthyldiéthanolamine,
- entre 5% et 50% poids de solvant physique choisi dans le groupe constitué par

le méthanol, l'éthanol, le 2-éthoxyéthanol, le triéthylèneglycoldiméthyléther, le tétraéthylèneglycoldiméthyléther, le pentaéthylèneglycoldiméthyléther, le l'hexaéthylèneglycoldiméthyléther , le l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, le carbonate de propylène, le tributylphosphate.

Selon une ou plusieurs mise en œuvre de l'invention, la solution absorbante comporte entre 10 % et 30 % poids de N-méthyldiéthanolamine, et de préférence entre 42 % et 70 % poids d'eau.

Selon une ou plusieurs mise en œuvre de l'invention, la solution absorbante comporte entre 37 % et 75 % poids d'eau.

Selon une ou plusieurs mise en œuvre de l'invention, la solution absorbante comporte :

- entre 5 % et 20 % poids de N-méthyldiéthanolamine ; et
- entre 0,5 % et 20 % poids d'au moins un composé activateur comprenant une fonction amine primaire ou secondaire choisi dans le groupe constitué par :
  - la pipérazine ;
  - la 1-méthyl-pipérazine ;
  - l'homopipérazine ;
  - la N-(2-hydroxyéthyl)pipérazine ;
  - la 3-(méthylamino)propylamine ;
  - la N,N'-diméthyl-1,6-hexanediamine ;
  - la N-méthyl-1,6-hexanediamine ;
  - la N,N',N'-triméthyl-1,6-hexanediamine ;
  - le 2-amino-2-méthyl-1-propanol.

Dans ce cas, la solution absorbante peut comporter entre 5 % et 15 % poids de N-méthyldiéthanolamine, et de préférence entre 10 % et 15 % de N-méthyldiéthanolamine.

De préférence, le composé activateur est la pipérazine.

Avantageusement, la solution absorbante comporte entre 0,5 % et 10 % poids dudit au moins un composé activateur, de préférence entre 0,5 % et 6 % poids dudit au moins un composé activateur, et encore plus préférentiellement entre 1% et 6 % poids dudit au moins un composé activateur.

Selon l'invention, la solution absorbante comporte en outre au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, le carbonate de propylène, le tributylphosphate.

Selon une ou plusieurs mise en œuvre de l'invention, la solution absorbante ne comporte pas d'additif anti-moussage.

Selon une ou plusieurs mise en œuvre de l'invention, l'étape d'absorption des composés acides est réalisée à une pression comprise entre 0,1 MPa et 20 MPa, et à une température comprise entre 20°C et 100°C.

Selon une ou plusieurs mise en œuvre de l'invention, on obtient une solution absorbante chargée en composés acides après l'étape d'absorption, et on effectue au moins une étape de régénération de ladite solution absorbante chargée en composés acides à une pression comprise entre 0,1 MPa et 1 MPa, de préférence comprise entre 0,1 MPa et 0,5 MPa, et à une température comprise entre 100°C et 180°C, de préférence comprise entre 110°C et 140°C.

Selon une ou plusieurs mise en œuvre de l'invention, la solution absorbante est monophasique lors de l'étape d'absorption au sein d'une colonne d'absorption et jusqu'à au moins l'entrée dans une colonne de régénération dans laquelle est effectuée l'étape de régénération, et a de préférence une température inférieure ou égale à 110°C dans la colonne d'absorption et jusqu'à au moins l'entrée dans la colonne de régénération.

Selon une ou plusieurs mise en œuvre de l'invention, l'effluent gazeux est choisi parmi le gaz naturel, le gaz de synthèse, les fumées de combustion, les gaz de raffinerie, les gaz acides issus d'une unité aux amines, les gaz de queue issus d'une unité de conversion de l'$H_2S$ en soufre par procédé Claus, les gaz issus de fermentation de biomasse, les gaz de cimenterie, les fumées d'incinérateur.

Le procédé selon l'invention peut être mis en œuvre pour l'élimination sélective de l'$H_2S$ par rapport au $CO_2$ d'un effluent gazeux comportant de l'$H_2S$ et du $CO_2$, de préférence du gaz naturel.

Le procédé selon l'invention peut aussi être mis en œuvre pour la décarbonatation d'un biogaz.

D'autres objets et avantages de l'invention apparaîtront à la lecture de la description qui suit d'exemples de réalisations particuliers de l'invention, donnés à titre d'exemples non limitatifs, la description étant faite en référence à la figure annexée décrite ci-après.

## Liste des figures

La figure 1 représente un schéma de principe du procédé de traitement d'effluents de gaz acides. Cette illustration ne comporte pas l'ensemble des composantes nécessaires à la mise en œuvre du procédé, par exemple les échangeurs de chaleur, pompes, mélangeurs etc. Seuls les éléments nécessaires à la compréhension de l'invention y sont représentés, l'homme du métier étant capable de compléter cette représentation pour mettre en œuvre l'invention.

## Description des modes de réalisation

La présente invention propose d'éliminer les composés acides d'un effluent gazeux en mettant en œuvre en solution absorbante aqueuse dont la composition est détaillée ci-après. Le procédé est décrit plus longuement suite aux détails concernant la composition de la solution absorbante.

## Composition de la solution absorbante

La solution absorbante mise en œuvre pour l'élimination des composés acides contenus dans un effluent gazeux comporte :

- de l'eau;
- entre 20 et 28% poids de pentaméthyldipropylènetriamine (PMDPTA) ;
- entre 5 et 35% poids de N-méthyldiéthanolamine (MDEA), et
- entre 5% et 50% poids de solvant physique choisi dans le groupe constitué par

le méthanol, l'éthanol, le 2-éthoxyéthanol, le triéthylèneglycoldiméthyléther, le tétraéthylèneglycoldiméthyléther, le pentaéthylèneglycoldiméthyléther, le l'hexaéthylèneglycoldiméthyléther , le l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, le carbonate de propylène, le tributylphosphate.

La MDEA est une monoamine tertiaire, qui utilisée en solution aqueuse, constitue une solution absorbante de référence dans le domaine de la désacidification d'un gaz, notamment pour l'absorption sélective de l'$H_2S$ par rapport au $CO_2$ contenus dans le gaz.

La PMDPTA est une polyamine tertiaire, plus précisément une triamine tertiaire, de formule suivante :

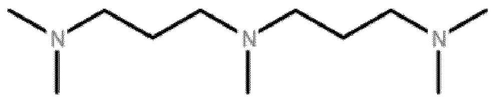

Il est connu dans l'art antérieur que les polyamines offrent un avantage comparé aux monoamines en permettant d'atteindre un nombre de sites réactifs plus élevé par unité de masse de produit, avec le potentiel d'une capacité d'absorption accrue. Cependant, les polyamines ne sont pas équivalentes en terme de capacité d'absorption des gaz acides, de performance pour l'élimination sélective de l'$H_2S$ et de stabilité chimique dans les conditions du procédé de traitement de gaz acides. En outre, certaines polyamines, employées en solution aqueuse, peuvent conduire à un phénomène de démixtion, c'est-à-dire une séparation en deux phases liquides de la solution absorbante liquide monophasique, dans certaines conditions de température et de taux de charge en gaz acides.

La combinaison de PMDPTA et de MDEA en solution aqueuse, dans les concentrations indiquées, permet d'éviter une séparation de la solution absorbante en deux phases liquides, c'est à-dire un phénomène de démixtion, dans les conditions de température et de taux de charge habituellement rencontrés lors de la phase d'absorption et de circulation jusqu'au régénérateur, tout en atteignant des capacités d'absorption de gaz acides particulièrement élevées.

Les inventeurs ont également mis en évidence que, de manière inattendue, la combinaison spécifique de ces deux amines en solution aqueuse présente un moussage limité en présence d'hydrocarbures et dans des conditions dégradées de la solution absorbante, d'excellentes propriétés de stabilité chimique, une moindre corrosivité vis-à-vis des équipements métalliques utilisés lors de la désacidification, et de très bonnes performances pour l'absorption sélective de l'$H_2S$ par rapport au $CO_2$ contenus dans un effluent gazeux à traiter.

Selon un mode de réalisation, la solution absorbante comporte entre 10 % et 30 % poids de MDEA.

La solution absorbante peut contenir entre 37 % et 75 % poids d'eau.

La solution absorbante contient de préférence entre 42 % et 70 % poids d'eau lorsque la solution contient entre 10 % et 30 % poids de MDEA.

Partout dans la description, la somme des fractions massiques exprimées en % poids des différents composés de la solution absorbante est égale à 100 % en poids de la solution absorbante vierge, i.e. la solution absorbante sans prise en compte des gaz acides absorbés ou autres produits co-absorbés ou produits de dégradation.

Les gammes de concentration s'entendent comme bornes incluses, sauf spécifié autrement.

Dans la présente description, les pressions sont exprimées en valeurs absolues, sauf indiqué autrement. Selon un mode de réalisation, la solution absorbante aqueuse comporte de 20 % à 25 % poids de PMDPTA et de 25 % à 35 % poids de MDEA.

Selon un mode de réalisation qui ne fait pas partie des revendications, la solution absorbante consiste en une solution aqueuse composée de 20 % à 28 % poids de PMDPTA et de 5 % à 35 % poids de MDEA, de préférence composée de 20% à 25% poids de PMDPTA et de 25% à 35% poids de MDEA.

Selon un mode de réalisation qui ne fait pas partie des revendications, la solution absorbante comporte :

- de l'eau;
- entre 22 % et 28 % poids de PMDPTA; et
- entre 5 % et 35 % poids de MDEA.

Dans ce cas la solution absorbante peut consister en une solution aqueuse composée de 22 % à 28 % poids de PMDPTA et de 5 % à 35 % poids de MDEA, et de préférence composée de 22% à 25% poids de PMDPTA et de 25% à 35% poids de MDEA.

Selon un autre mode de réalisation qui ne fait pas partie des revendications, la solution absorbante comporte :

- de l'eau;
- entre 20 % et 28 % poids de PMDPTA ;
- entre 5 % et 20 % poids de MDEA ; et
- entre 0,5 % et 20 % poids d'au moins un composé activateur comprenant une fonction amine primaire ou secondaire

choisi dans le groupe constitué par :

- la pipérazine ;
- la 1-méthyl-pipérazine ;
- l'homopipérazine ;
- la N-(2-hydroxyéthyl)pipérazine ;
- la 3-(méthylamino)propylamine ;
- la N,N'-diméthyl-1,6-hexanediamine ;
- la N-méthyl-1,6-hexanediamine ;
- la N,N',N'-triméthyl-1,6-hexanediamine ;
- le 2-amino-2-méthyl-1-propanol.

Selon ce mode de réalisation, la solution absorbante peut comprendre un mélange de composés d'activateurs tels que listés ci-dessus, ainsi qu'il est sous-entendu par l'expression « au moins un composé activateur ».

Par composé activateur, on entend un composé qui permet d'accélérer la cinétique d'absorption du $CO_2$, et dans certains cas du COS, contenu(s) dans le gaz à traiter. Dans la présente description, on fait référence à une « solution activée » pour désigner une solution absorbante comportant un tel composé activateur.

Selon l'invention, une telle solution activée est mise en œuvre en particulier pour une application de désacidification non sélective du gaz à traiter, par exemple une application de désacidification totale du gaz, c'est-à-dire lorsqu'il est recherché à éliminer le $CO_2$ et le COS pour atteindre des spécifications très poussées, i.e. des performances d'épuration élevées.

De préférence, selon ce mode de réalisation portant sur une solution activée, la solution absorbante comporte entre 0,5 % et 10 % poids dudit au moins un composé activateur, de manière préférée entre 0,5 % et 6 % poids dudit au moins un composé activateur, et de manière encore plus préférée entre 1% et 6 % poids dudit au moins un composé activateur.

Selon ce mode de réalisation portant sur une solution activée, la concentration en MDEA dans la solution absorbante est de préférence comprise entre 5 % et 15 % poids, de préférence entre 10% et 15% poids. Dans ce cas, la solution absorbante peut comporter entre 0,5 % et 10 % poids dudit au moins un composé activateur, de manière préférée entre 0,5 % et 6 % poids dudit au moins un composé activateur, et de manière encore plus préférée entre 1% et 6 % poids dudit au moins un composé activateur.

De préférence, selon ce mode de réalisation portant sur une solution activée, la solution absorbante comporte au moins un composé activateur qui est la pipérazine. Plus préférentiellement, la solution absorbante comporte un composé activateur qui est la pipérazine.

Selon un autre mode de réalisation qui ne fait pas partie des revendications, la solution absorbante comporte:

- de l'eau;
- entre 20 % et 28 % poids de PMDPTA, de préférence entre 22% et 27% poids de PMDPTA ;
- entre 5 % et 20 % poids de MDEA, de préférence entre 5 % et 15 % poids de MDEA; et
- entre 0,5 % et 20 % poids de pipérazine, et de préférence entre 0,5 % et 10 % poids de pipérazine, plus préférentiellement entre 1% et 6% poids de pipérazine.

La concentration en eau est variable et représente le complément, en poids, de la somme des autres composés compris dans la solution absorbante.

Selon l'invention, la concentration en eau est variable.

De préférence, la solution absorbante comporte au moins 37 % poids d'eau. Selon l'invention, la solution absorbante contient des composés organiques non réactifs vis-à-vis des composés acides, couramment nommés "solvants physiques", qui permettent d'augmenter la solubilité d'au moins un ou plusieurs composés acides de l'effluent gazeux. Ainsi, selon l'invention, la solution absorbante comporte entre 5% et 50% poids de solvant physique tel que du méthanol, de l'éthanol, du 2-éthoxyéthanol, du triéthylèneglycoldiméthyléther, du tétraéthylèneglycoldiméthyléther, du pentaéthylèneglycoldiméthyléther, de l'hexaéthylèneglycoldiméthyléther , de l'heptaéthylèneglycoldiméthyléther, de l'octaéthylèneglycoldiméthyléther, du butoxyacétate de diéthylèneglycol, du triacétate de glycérol, du sulfolane, de la N-méthylpyrrolidone, de la N-méthylmorpholin-3-one, du N,N-diméthylformamide, de la N-formyl-morpholine, de la N,N-diméthyl-imidazolidin-2-one, du N-méthylimidazole, de l'éthylèneglycol, du diéthylèneglycol, du triéthylèneglycol, du thiodiglycol, du carbonate de propylène, du tributylphosphate.

**Nature des effluents gazeux**

Selon l'invention, les solutions absorbantes peuvent être mises en œuvre pour désacidifier les effluents gazeux

suivants : le gaz naturel, le gaz de synthèse, les fumées de combustion, les gaz de raffinerie, les gaz acides issus d'une unité aux amines, les gaz de queue issus d'une unité de conversion de l'$H_2S$ en soufre par procédé Claus, le biogaz tel que le gaz issu de la fermentation de biomasse, les gaz de cimenterie, les fumées d'incinérateur. Ces effluents gazeux contiennent un ou plusieurs des composés acides suivants : le $CO_2$, l'$H_2S$, des mercaptans (par exemple le méthylmercaptan ($CH_3SH$), l'éthylmercaptan ($CH_3CH_2SH$), le propylmercaptan ($CH_3CH_2CH_2SH$)), du COS, du $CS_2$, le $SO_2$.

Les fumées de combustion sont produites notamment par la combustion d'hydrocarbures, de biogaz, de charbon dans une chaudière ou pour une turbine à gaz de combustion, par exemple dans le but de produire de l'électricité. A titre d'illustration, on peut mettre en œuvre un procédé de désacidification selon l'invention pour absorber au moins 70 %, de préférence au moins 80 % voire au moins 90 % du $CO_2$ contenu dans les fumées de combustion. Une telle élimination du $CO_2$ peut être désignée par le terme «décarbonatation » du gaz. Ces fumées ont généralement une température comprise entre 20°C et 60°C, une pression comprise entre 0,1 MPa et 0,5 MPa et peuvent comporter entre 50 % et 80 % volume d'azote ($N_2$), entre 5 % et 40 % volume de $CO_2$, entre 1 % et 20 % volume d'oxygène ($O_2$), et quelques impuretés comme des SOx et des NOx, s'ils n'ont pas été éliminés en amont du procédé de désacidification. En particulier, le procédé de désacidification selon l'invention est particulièrement bien adapté pour absorber le $CO_2$ contenu dans des fumées de combustion comportant une faible pression partielle de $CO_2$, par exemple une pression partielle de $CO_2$ inférieure à 0,02 MPa.

Le procédé de désacidification selon l'invention peut être mis en œuvre pour désacidifier un gaz de synthèse. Le gaz de synthèse contient du monoxyde de carbone CO, de l'hydrogène $H_2$ (généralement dans un ratio $H_2$/CO égale à 2), de la vapeur d'eau (généralement à saturation à la température où le lavage est effectué) et du $CO_2$ (de l'ordre de la dizaine de pourcents volume). La pression est généralement comprise entre 2 et 3 MPa, mais peut atteindre jusqu'à 7 MPa. Il peut contenir, en outre, des impuretés soufrées ($H_2S$, COS, etc.), azotées ($NH_3$, HCN) et halogénées.

Le procédé de désacidification selon l'invention peut être mis en œuvre pour désacidifier un gaz naturel. Le gaz naturel est constitué majoritairement d'hydrocarbures gazeux, mais peut contenir plusieurs des composés acides suivants : le $CO_2$, l'$H_2S$, des mercaptans, du COS, du $CS_2$. La teneur de ces composés acides est très variable et peut aller jusqu'à 70 % en volume pour le $CO_2$ et jusqu'à 40 % en volume pour l'$H_2S$. La température du gaz naturel peut être comprise entre 10°C et 100°C. La pression du gaz naturel à traiter peut être comprise entre 1 et 20 MPa. L'invention peut être mise en œuvre pour atteindre des spécifications généralement imposées sur le gaz désacidifié, qui sont moins de 2 % en volume de $CO_2$, voire moins de 50 ppm en volume de $CO_2$ pour réaliser ensuite une liquéfaction du gaz naturel, moins de 4 ppm en volume d'$H_2S$, et moins de 50 ppm, voire moins de 10 ppm, en volume de soufre total.

Le procédé de désacidification selon l'invention peut être mis en œuvre pour désacidifier des biogaz, typiquement des gaz issus de la fermentation de biomasse et généralement prétraités pour retirer des impuretés telles que l'$H_2S$, des mercaptans ou des siloxanes. Ces gaz ont généralement une température comprise entre 5°C et 60°C, une pression comprise entre 0,1 et 2 MPa et peuvent comporter entre 30% et 75% volume de méthane, entre 0 % et 40 % volume d'azote ($N_2$), entre 15 % et 50 % volume de $CO_2$, entre 0 % et 10 % d'oxygène volume ($O_2$). En particulier, le procédé de désacidification selon l'invention est avantageusement mis en œuvre pour éliminer le $CO_2$ d'un biogaz qui a la particularité de généralement contenir une quantité importante d'oxygène, par exemple plusieurs dixièmes à plusieurs pourcents volume d'oxygène. Il est connu que les amines sont en général sensibles à l'oxygène et se dégradent plus facilement en présence d'oxygène. La présente invention est ainsi particulièrement bien adaptée au traitement de biogaz, du fait notamment de la bonne stabilité chimique de la solution absorbante en présence d'oxygène.

**Procédé d'élimination des composés acides dans un effluent gazeux**

Le procédé d'élimination des composés acides d'un effluent gazeux selon l'invention comprend une étape d'absorption des composés acides par mise en contact de l'effluent gazeux avec la solution absorbante.

L'étape d'absorption est suivie d'une étape de régénération, tel que représenté sur le schéma de la figure 1.

Dans la présente invention, les différentes plages de paramètres pour une étape donnée tels que les plages de pression et les plages de température peuvent être utilisées seules ou en combinaison. Par exemple, dans la présente invention, une plage de valeurs préférées de pression peut être combinée avec une plage de valeurs de température plus préférée.

En référence à la figure 1, l'installation de désacidification d'un effluent gazeux comprend une colonne d'absorption C1 munie de moyens de mise en contact entre gaz et liquide, par exemple un garnissage vrac, un garnissage structuré ou des plateaux. L'effluent gazeux à traiter est acheminé par une conduite 1 débouchant au fond de la colonne C1. Une conduite 4 permet l'introduction de la solution absorbante en tête de la colonne C1. Une conduite 2 permet l'évacuation du gaz traité (désacidifié), et une conduite 3 permet d'acheminer la solution absorbante enrichie en composés acides suite à l'absorption vers une colonne de régénération C2. Cette colonne de régénération C2 est équipée d'internes de mise en contact entre gaz et liquide, par exemple des plateaux, des garnissages en vrac ou structurés. Le fond de la colonne C2 est équipé d'un rebouilleur R1 qui apporte la chaleur nécessaire à la régénération en vaporisant une fraction de la solution absorbante. La solution enrichie en composés acides est introduite en tête de la colonne de régénération C2

par une conduite 5. Une conduite 7 permet d'évacuer au sommet de la colonne C2 le gaz enrichi en composés acides libérés lors de la régénération, et une conduite 6 disposée au fond de la colonne C2 permet d'envoyer la solution absorbante régénérée vers la colonne d'absorption C1. Un échangeur de chaleur E1 permet de récupérer la chaleur de la solution absorbante régénérée issue de la colonne C2 pour chauffer la solution absorbante enrichie en composés acides sortant de la colonne d'absorption C1.

L'étape d'absorption consiste à mettre en contact l'effluent gazeux arrivant par la conduite 1 avec la solution absorbante arrivant par la conduite 4. Lors du contact, les fonctions amines des molécules de la solution absorbante réagissent avec les composés acides contenus dans l'effluent de manière à obtenir un effluent gazeux appauvri en composés acides qui est évacué par la conduite 2 en tête de la colonne C1 et une solution absorbante enrichie en composés acides évacuée par la conduite 3 en fond de la colonne C1 pour être régénérée.

L'étape d'absorption des composés acides peut être réalisée à une pression dans la colonne C1 comprise entre 0,1 MPa et 20 MPa, de préférence entre 2 MPa et 10 MPa pour le traitement d'un gaz naturel, et de préférence entre 0,1 MPa et 0,3 MPa pour le traitement des fumées industrielles.

L'étape d'absorption des composés acides peut être réalisée à une température dans la colonne C1 comprise entre 20°C et 100°C, préférentiellement comprise entre 30°C et 90°C, voire entre 30°C et 60°C.

L'étape de régénération consiste notamment à chauffer et, éventuellement à détendre, la solution absorbante enrichie en composés acides afin de libérer les composés acides sous forme gazeuse. La solution absorbante enrichie en composés acides sortant de la colonne C1 est introduite dans l'échangeur de chaleur E1, où elle est réchauffée par le flux circulant dans la conduite 6 en provenance de la colonne de régénération C2. La solution réchauffée en sortie de E1 est introduite dans la colonne de régénération C2 par la conduite 5, à une température généralement inférieure ou égale à 110°C.

Dans la colonne de régénération C2, sous l'effet de la mise en contact de la solution absorbante arrivant par la conduite 5 avec la vapeur produite par le rebouilleur, les composés acides sont libérés sous forme gazeuse et évacués en tête de colonne C2 par la conduite 7. La solution absorbante régénérée, c'est-à-dire appauvrie en composés acides, est évacuée par la conduite 6 et est refroidie dans E1, puis recyclée dans la colonne d'absorption C1 par la conduite 4.

L'étape de régénération peut être réalisée par régénération thermique, éventuellement complétée par une ou plusieurs étapes de détente. Par exemple, la solution absorbante enrichie en composés acides évacuée par la conduite 3 peut être envoyée, après chauffage éventuel, dans un premier ballon de détente (non représenté), avant son passage dans l'échangeur de chaleur E1. Dans le cas d'un gaz naturel, la détente permet d'obtenir un gaz évacué au sommet du ballon contenant la majeure partie des hydrocarbures aliphatiques co-absorbés par la solution absorbante. Ce gaz peut éventuellement être lavé par une fraction de la solution absorbante régénérée et le gaz ainsi obtenu peut être utilisé comme gaz combustible. Le ballon de détente opère de préférence à une pression inférieure à celle de la colonne d'absorption C1 et supérieure à celle de la colonne de régénération C2. Cette pression est généralement fixée par les conditions d'utilisation du gaz combustible, et est typiquement de l'ordre de 0,2 à 1,5 MPa, de préférence de 0,5 à 1,5 MPa. Le ballon de détente opère à une température sensiblement identique à celle de la solution absorbante obtenue en fond de la colonne d'absorption C1.

La solution absorbante comporte alors une quantité de gaz acides réduite après l'étape de détente. Elle peut être recyclée en partie vers la colonne d'absorption C1 pour un nouveau cycle d'absorption dans une mise en œuvre particulière de l'invention (non représentée), possiblement à un niveau différent de la solution absorbante régénérée issu de la colonne C2. Dans ce cas où la solution absorbante est partiellement recyclée vers la colonne d'absorption, l'autre partie de la solution absorbante issue de l'étape de détente est introduite dans la colonne de régénération C2.

Dans une mise en œuvre particulière de l'invention (non représentée), la solution absorbante après l'étape de détente est intégralement recyclée dans la colonne d'absorption C1 et aucune colonne de régénération C2 est mise en œuvre.

La régénération peut être effectuée à une pression dans la colonne C2 comprise entre 0,1 MPa et 0,5 MPa, de préférence entre 0,1 MPa et 0,4 MPa, voire jusqu'à 1 MPa et à une température dans la colonne C2 comprise entre 100°C et 180°C, de préférence comprise entre 100°C et 140°C, plus préférentiellement comprise entre 110°C et 140°C, et encore plus préférentiellement comprise entre 115°C et 140°C, et encore de manière plus préférée entre 115°C et 130°C. Par exemple, la température de régénération dans la colonne C2 est comprise entre 115°C et 130°C dans les cas où le gaz acide est envoyé à l'atmosphère ou dans un procédé de traitement aval, comme un procédé Claus ou un procédé de traitement de gaz de queue.

Selon un mode de réalisation préféré, la régénération est effectuée à une pression dans la colonne C2 comprise entre 0,1 MPa et 0,5 MPa, de préférence entre 0,1 MPa et 0,4 MPa, et à une température comprise entre 110°C et 140°C, plus préférentiellement comprise entre 115°C et 130°C.

Selon l'invention, la solution absorbante liquide reste avantageusement monophasique lors de la phase d'absorption dans la colonne d'absorption C1 et lors de la circulation de la solution enrichie en composés acides jusqu'au moins à l'entrée dans la colonne de régénération C2. La formulation spécifique de la solution absorbante permet en effet de minimiser le risque de démixtion de la solution absorbante lors de l'absorption et la circulation de la solution jusqu'à la

colonne de régénération. Une telle démixtion pourrait être en effet source de problèmes opératoires. En effet, si la solution est sous forme de deux phases séparées dans la colonne d'absorption, le flux de composes acides transférés du gaz vers la solution absorbante est fortement impacté, et la hauteur de colonne doit généralement être adaptée en conséquence (augmentation de la taille de la colonne). Ce phénomène pose ainsi des difficultés de mise en œuvre, et, compte tenu de la complexité du système, est difficile à modéliser. En outre, une solution sous forme de deux phases liquides distinctes peut nécessiter la mise en place de dispositifs de séparation (par exemple par décantation) en amont de la colonne de régénération, ce qui ajoute à la complexité et aux coûts du procédé. De tels problèmes sont ainsi évités dans le procédé selon l'invention.

Selon l'invention, la solution absorbante minimise la corrosion des équipements de l'installation de désacidification d'un effluent gazeux, dont les surfaces, comportant un acier, sont amenées à être en contact avec ladite solution.

Ces équipements peuvent être composés d'un acier faiblement allié, aussi appelés acier au carbone ou acier carbone, ou d'un acier inox. Par acier faiblement allié, il est entendu un acier composé majoritairement de fer, en particulier d'au moins 90 % massique de fer, et de 0,01 % à 2,5 % massique de carbone, et d'au moins un élément d'addition choisi parmi l'aluminium, le chrome, le cobalt, le cuivre, le manganèse, le molybdène, le nickel, le niobium, le phosphore, le silicium, le titane, le tungstène, le vanadium, la teneur individuelle dudit au moins un élément d'addition étant inférieure à 5 % massique. Cette définition n'exclue pas la présence d'autres éléments dans la limite de 1 % massique. Les aciers inox, moins sensibles à la corrosion, se distinguent dans leur composition des aciers faiblement alliés par une teneur en chrome supérieure à 11,5 % poids.

Les équipements concernés sont, de manière non limitative, les colonnes d'absorption et de régénération où une mise en contact gaz/liquide est réalisée, les conduits reliant les différents éléments de l'installation, les éléments positionnés à l'intérieur des enceintes tels que des plateaux, des garnissages structurés ou vrac, les échangeurs, les corps de pompes et de vannes, les bacs de stockage.

Selon l'invention, les équipements comportent des surfaces majoritairement composées d'acier, ce qui n'exclut toutefois pas la présence d'autres matériaux utilisés pour la fabrication de tels équipements.

Par son pouvoir de corrosion limité, la solution absorbante permet de limiter la corrosion des équipements de l'installation de désacidification, et également de limiter ou s'affranchir de l'utilisation d'additifs anti-corrosion dans le procédé selon l'invention.

Un autre avantage procuré par la mise en œuvre de la solution absorbante pour la désacidification d'un effluent gazeux selon le procédé de l'invention est la limitation du phénomène de moussage. Le moussage nuit de manière générale aux performances du procédé et peut même conduire à l'arrêt de l'unité. Le moussage reste aujourd'hui un phénomène difficile à contrôler, et pourtant critique pour le fonctionnement de l'unité de désacidification.

De manière inattendue, la solution absorbante permet de limiter le moussage en présence d'hydrocarbures, aliphatiques ou aromatiques, qui peuvent être initialement présents dans le gaz à traiter, et/ou dans certaines conditions de dégradation de la solution, reflétant ses conditions d'utilisation. Il est ainsi possible d'envisager de limiter, ou même de s'affranchir de l'usage d'additifs anti-moussage, traditionnellement utilisés pour remédier au problème du moussage de solution aux amines. Ainsi, selon un mode de réalisation, la solution absorbante ne comporte pas d'additif anti-moussage.

Par additif anti-moussage, on entend tout composé ou mélange de composés additionnels dans la solution absorbante, autre que les composés cités pouvant entrer dans la composition de la solution absorbante, et susceptible de prévenir le moussage de la solution absorbante ou d'éliminer une mousse déjà formée.

Traditionnellement, l'usage d'additif anti-moussage est réalisé par un dosage initial consistant en une injection régulière d'une solution d'antimousse dans la solution absorbante pour atteindre quelques dixièmes de pourcents poids, puis ce dosage est ajusté selon le niveau de moussage observé sur l'unité. On utilise classiquement des composés organiques à base de silicium telles que des polydialkylsiloxanes ou des résines silicones, généralement en émulsion dans l'eau. On note que l'usage excessif ou inapproprié d'additifs anti-moussage est connu pour aggraver le problème de moussage, ce qui rend l'emploi de tels additifs difficile à maîtriser.

Un test qui peut être avantageusement utilisé en laboratoire pour caractériser le pouvoir moussant d'une solution et/ou le besoin d'utiliser un additif anti-mousse consiste à déterminer la hauteur de mousse générée dans un contenant cylindrique en verre de type éprouvette graduée, suite à l'agitation de la solution, la hauteur de mousse étant exprimée en pourcentage par rapport à la hauteur initiale de la solution, en fonction du temps.

Il est par exemple réalisé à 20°C sur un volume de 50 ml de solution, placé dans un bécher de 250 ml, et agité à l'aide d'un agitateur à 5 pales pendant 4 minutes à 1200 t/min. Dès l'arrêt de l'agitation, la hauteur de mousse générée au-dessus de la surface de la solution est mesurée immédiatement (t0) et à 30 secondes et est exprimée en pourcentage de la hauteur initiale. L'incertitude de la mesure correspond à 2,5 % de la hauteur initiale.

Selon l'invention, la solution absorbante présente une résistance à la dégradation, notamment en présence d'oxygène, limitant ainsi la production de sous-produits qui favorisent la corrosion par des phénomènes bien connus de l'homme du métier. On parle également dans la présente description de stabilité chimique pour exprimer cette résistance à la dégradation, en particulier à des températures importantes telles que celles opérées lors de la régénération de la solution absorbante.

Le procédé selon l'invention permet avantageusement une élimination sélective de l'$H_2S$ vis-à-vis du $CO_2$ dans le gaz à traiter, par exemple du gaz naturel. La solution absorbante montre en effet de bonnes performances pour ce type d'application, notamment une cinétique d'absorption du $CO_2$ relativement lente avec une capacité d'absorption de l'$H_2S$ importante, qui permettent une élimination sélective efficace ainsi que la possibilité de réduire les débits de solution absorbante mis en œuvre .

Le procédé selon l'invention peut être avantageusement mis en œuvre pour une désacidification non sélective d'un effluent gaz, par exemple pour la décarbonatation d'une fumée de combustion, ou la décarbonatation d'un biogaz, notamment en raison des bonnes performances des solutions absorbantes activées, en termes de capacité d'absorption des gaz acides, notamment du $CO_2$, mais également en termes de cinétique d'absorption du $CO_2$, et de stabilité chimique.

Exemples

Les exemples ci-dessous illustrent, de manière non limitative les performances de solutions absorbantes en vue d'éliminer des composés acides, comme le $CO_2$ ou l'$H_2S$, contenus dans un effluent gazeux.

Les exemples ci-dessous ne relèvent pas de l'invention revendiquée.

On utilise comme solutions absorbantes dans ces exemples des solutions aqueuses de PMDPTA en association avec la MDEA. Le tableau 1 ci-dessous résume les compositions de ces solutions.

Certaines solutions absorbantes contiennent également de la pipérazine (Pz) utilisée comme activateur.

Tableau 1

| | |
|---|---|
| Solution absorbante A | PMDPTA (22 % poids) + MDEA (28 % poids) + $H_2O$ |
| Solution absorbante B | PMDPTA (27 % poids) + MDEA (13 % poids) + Pz (5 % poids) + $H_2O$ |

Dans un premier temps (exemples 1 et 2), on montre que certaines propriétés physico-chimiques des solutions absorbantes A et B, en particulier la miscibilité des constituants, sont très différentes de celles de solutions aqueuses de PMDPTA selon l'art antérieur avec ou sans Pz.

Les compositions des solutions absorbantes selon l'art antérieur utilisées, à base de PMDPTA (solutions absorbantes C, D, E), sont données dans le tableau 2 ci-dessous, ainsi qu'une solution absorbante F à base d'une autre polyamine, la pentaméthyldiéthylènetriamine (PMDETA) (selon le document WO04082809 ou US6267939), et deux autres solutions absorbantes M et N à base d'une autre polyamine, la N,N,N',N'-Tétraméthyldipropylènetriamine (TMDPTA), divulguée par exemple dans les documents US6267939 ou WO09156273A2.

Tableau 2

| | |
|---|---|
| Solution absorbante C | PMDPTA (50 % poids) + $H_2O$ |
| Solution absorbante D | PMDPTA (45 % poids) + $H_2O$ |
| Solution absorbante E | PMDPTA (30 % poids) + $H_2O$ |
| Solution absorbante F | PMDETA (50 % poids) + $H_2O$ |
| Solution absorbante G | PMDPTA (30 % poids) + MDEA (10 % poids) + Pz (5 % poids) + $H_2O$ |
| Solution absorbante M | TMDPTA (50 % poids) + $H_2O$ |
| Solution absorbante N | TMDPTA (27 % poids) + MDEA (13 % poids) + Pz (5 % poids) + $H_2O$ |

Dans les exemples 3 à 5, les avantages des solutions absorbantes en termes de stabilité chimique, de limitation des problèmes de corrosion et de moussage sont illustrés, en comparaison à différentes solutions aqueuses de MDEA avec ou sans Pz, dont les solutions absorbantes sont indiquées dans le tableau 3 ci-dessous. Les solutions absorbantes données dans le tableau 3 constituent des solvants de référence pour le traitement de gaz acides. Certaines caractéristiques des solutions mises en œuvre dans le procédé sont également comparées à celles d'une solution aqueuse de diéthanolamine (DEA) à 40 % poids (solution absorbante x donnée au tableau 3), qui est également un solvant de référence pour le traitement des gaz acides.

Tableau 3

| | |
|---|---|
| Solution absorbante H | MDEA (50 % poids) + $H_2O$ |
| Solution absorbante I | MDEA (47 % poids) + $H_2O$ |

(suite)

| | |
|---|---|
| Solution absorbante J | MDEA (45 % poids) + $H_2O$ |
| Solution absorbante K | MDEA (39 % poids) + Pz (6 % poids) + $H_2O$ |
| Solution absorbante L | MDEA (40 % poids) + Pz (3,3 % poids) + $H_2O$ |
| Solution absorbante x | DEA (40 %poids) + $H_2O$ |

Dans les solutions absorbantes données dans les tableaux 1 à 3, la somme des fractions massiques exprimées en % poids des différents composés et de l'eau est égale à 100 % en poids de la solution absorbante vierge, i.e. la solution absorbante sans prise en compte des gaz acides absorbés ou autres produits co-absorbés ou produits de dégradation.

Dans l'exemple 3, la stabilité chimique de la solution absorbante B est comparée à celle de la solution absorbante selon l'art antérieur K à base de MDEA et de Pz, ainsi qu'à celle de la solution absorbante F selon les documents WO04082809 ou US6267939. La stabilité chimique de la solution absorbante B est également comparée à celle de la solution absorbante selon l'art antérieur M contenant 50% de TMDPTA, et celle de la solution absorbante selon l'art antérieur N contenant 25% de TMDPTA, 15% de MDEA et 5% de Pz, solution similaire à la solution absorbante B mais dans laquelle la PMDPTA est remplacée par la TMDPTA .

Dans l'exemple 4, la corrosivité des solutions absorbantes A et B est comparée à celle de la solution absorbante selon l'art antérieur J à base de MDEA, à celle de solution absorbante selon l'art antérieur L à base de MDEA et de Pz, ainsi qu'à celle d'une solution aqueuse de DEA à 40 % poids.

Enfin, dans l'exemple 5, les caractéristiques de moussage de solutions absorbantes A et B sont comparées à celles de la solution absorbante selon l'art antérieur J à base de MDEA et de solution absorbante K selon l'art antérieur, à base de MDEA et de Pz.

**Exemple 1 : miscibilité à 40°C. Effet du taux de charge en $CO_2$**

Le phénomène de démixtion observé dans les solutions aqueuses de PMDPTA chargées en $CO_2$ tel que décrit dans le document FR2877858 peut être éliminé en associant la PMDPTA avec de la MDEA dans les proportions définies selon l'invention. Cette solution absorbante consiste à substituer un certain pourcentage poids de PMDPTA par un pourcentage poids équivalent de MDEA selon l'invention.

Suivant la composition de la solution absorbante à base de PMDPTA et la composition du gaz à traiter, notamment la pression partielle de $CO_2$, une séparation de phase liquide-liquide peut se produire connu sous le nom de démixtion. On détermine par des tests au laboratoire (dans des réacteurs parfaitement agités gaz-liquide) les conditions dans lesquelles se produit la démixtion pour une solution absorbante donnée (i.e. concentrations des amines et de l'eau donnée), à 40°C, en augmentant progressivement la pression partielle de $CO_2$ et donc le taux de charge en $CO_2$ ($\alpha = n_{gaz\ acide}/n_{amine}$ avec $n_{gaz\ acide}$ le nombre de moles de gaz acide et $n_{amine}$ le nombre de mole d'amine dans la solution liquide) à l'équilibre physicochimique.

Selon les résultats de ces tests de laboratoire, la solution absorbante peut être mise en œuvre dans un procédé de désacidification tel que décrit sur la figure 1. Une solution absorbante à base de PMDPTA et de MDEA telle que définie selon l'invention est particulièrement adaptée à ce type de procédé, car elle reste monophasique dans les conditions opératoires correspondant à celle de la colonne d'absorption (i.e. généralement 40°C).

On s'intéresse ici aux équilibres liquide-liquide à 40°C, ce qui correspond aux températures basses dans une colonne d'absorption. Les tests au laboratoire sont réalisés pour les solutions absorbantes A et C ayant une concentration en amine tertiaire de 50 % poids. Le tableau 4 ci-dessous résume les résultats obtenus pour les différentes solutions absorbantes.

Tableau 4

| Solution absorbante | [PMDPTA] (%poids) | [MDEA] (% poids) | Taux de charge où l'on entre dans la zone diphasique | Taux de charge où l'on sort de la zone diphasique |
|---|---|---|---|---|
| **A** | 22 | 28 | pas de démixtion par élévation du taux de charge pour $PPCO_2 < 0,3$ MPa (soit jusqu'à un taux de charge de 1,24) | |
| C | 50 | 0 | 0,7 | 1,5 |

On constate, selon les résultats du tableau 4, que la solution A permet d'avoir une solution absorbante monophasique dans les conditions opératoires représentatives de celles de la colonne d'absorption (dans l'exemple 0,3 MPa de pression partielle en $CO_2$ et 40°C, correspondant à un taux de charge en $CO_2$ de 1,24).

En revanche, on voit qu'une solution absorbante contenant 50 % de PMDPTA selon l'art antérieur (solution C) présente un phénomène de démixtion pour un taux de charge compris entre 0,7 et 1,5.

**Exemple 2 : effet de la température sur la miscibilité**

Le phénomène de démixtion observé dans les solutions aqueuses de PMDPTA peut être éliminé en associant la PMDPTA avec de la MDEA dans les proportions définies selon l'invention. Cette combinaison spécifique permet également d'empêcher tout phénomène de démixtion observé sur des solutions de PMDPTA sans activateur ou bien en présence d'un activateur tel que la pipérazine.

Suivant la composition de la solution absorbante à base de PMDPTA et la présence éventuelle d'une amine primaire ou secondaire, et la température de la solution absorbante, une séparation de phase liquide-liquide peut se produire (phénomène de démixtion).

On détermine par des tests au laboratoire, dans un bain d'huile thermostaté, la température à laquelle se produit la démixtion pour une solution absorbante donnée (i.e. concentrations des amines et de l'eau données), en augmentant progressivement la température du bain dans lequel est plongé un échantillon de ladite solution absorbante. On détecte le phénomène de démixtion en observant l'évolution de la transparence du mélange : le mélange devient trouble lorsque la démixtion apparaît.

Selon les résultats de ces tests de laboratoire, la solution absorbante peut être mise en œuvre dans un procédé de désacidification tel que décrit sur la figure 1. Une solution absorbante à base de PMDPTA et de MDEA dans les proportions définies par l'invention est particulièrement adaptée à ce type de procédé, car elle permet de rester monophasique dans les conditions de température après passage dans l'échangeur charge-effluent (généralement inférieure ou égale à 110°C).

Les tests au laboratoire sont réalisés pour des solutions absorbantes activées (B et G) ayant une concentration en amine(s) tertiaire(s) de 40 % poids et une concentration en Pz de 5 % poids. Le tableau 5 ci-dessous résume les résultats obtenus pour différentes solutions absorbantes. Les solutions sont chargées en $CO_2$ à un taux de charge de 1 mole/mole d'amine, représentatif des conditions en sortie d'échangeur charge-effluent.

Tableau 5

| Solution absorbante | [PMDPTA] (% poids) | [MDEA] (% poids) | [Pz] (% poids) | Température (T) à laquelle se produit la démixtion (°C) |
|---|---|---|---|---|
| **A** | 22 | 28 | 0 | pas de démixtion par élévation de température pour $T \leq 110°C$ |
| C | 50 | 0 | 0 | 40 |
| **B** | 27 | 13 | 5 | pas de démixtion par élévation de température pour $T \leq 110°C$ |
| G | 30 | 10 | 5 | 95 |

On constate, selon les résultats du tableau 5, que les solutions absorbantes mises en œuvre (solutions A et B) permettent d'éliminer totalement le phénomène de démixtion, phénomène qui est observé avec les solutions selon l'art antérieur C et G. Les solutions absorbantes A et B sont donc intéressantes, car elles permettent d'avoir une solution absorbante monophasique dans des conditions de taux de charge en $CO_2$ et de température correspondant à la sortie de l'échangeur charge-effluent (généralement inférieure ou égale 110°C).

En revanche, on voit qu'une solution chargée en $CO_2$ contenant 50% de PMDPTA (solution C selon l'art antérieur) ou 30 % de PMDPTA et 5% de Pz (solution G selon l'art antérieur) présentent un phénomène de démixtion pour une température inférieure à 110°C, soit 95°C pour la solution G, et 40°C pour la solution C.

**Exemple 3 : stabilité de solutions absorbantes**

Les amines de la solution absorbante mise en œuvre selon l'invention présentent la particularité d'être particulièrement résistantes aux dégradations qui peuvent se produire dans une unité de désacidification. On réalise un test de dégradation sur des solutions absorbantes au sein d'un réacteur fermé et dont la température est contrôlée par un système de régulation. Pour chaque solution, le test est réalisé avec un volume liquide de 100 $cm^3$ injecté dans le réacteur. La solution est préalablement dégazée de tous les contaminants dissous par maintien au vide, avant toute injection de gaz et le réacteur est ensuite placé dans une coque chauffante à la température de consigne et mis sous agitation magnétique. Le volume liquide est ensuite balayé à 60°C pendant une nuit sous une pression totale de 0,2 MPa

par un flux gazeux de 23 NL/h constitué d'un mélange d'azote et de $CO_2$ à une pression partielle de 0,17 MPa de manière à atteindre un taux de charge représentatif d'une solution chargée en fond d'absorbeur. Après saturation, on opère en réacteur fermé en chauffant la solution absorbante saturée en $CO_2$ à 140°C pendant une durée de 15 jours. La solution est ensuite refroidie à 80°C puis balayée à cette température par un flux de 30NL/h d'azote à une pression de 0,2 MPa pour éliminer le $CO_2$. La solution est ensuite analysée pour déterminer la concentration d'amine résiduelle.

L'influence de l'oxygène sur la dégradation de la solution absorbante peut également être étudiée en remplaçant une partie de l'azote par de l'air pendant la phase de saturation à 60°C et en prolongeant cette phase pendant 3 jours. Les débits d'air et d'azote ainsi que la pression totale sont ajustés pour atteindre la pression partielle d'oxygène souhaitée en maintenant à 0,17 MPa la pression partielle de $CO_2$ pendant la phase de saturation.

Le tableau 6 ci-dessous donne le taux de dégradation relatif, par dégradation sous $CO_2$, de la solution B, de la solution selon l'art antérieur M à base de TMDPTA, de la solution selon l'art antérieur N, similaire à la solution B mais dans laquelle la PMDPTA est remplacée par la TMDPTA, de la solution F selon l'art antérieur contenant 50% de PMDETA, ainsi que de la solution absorbante K de référence contenant 39 % poids de MDEA et 6 % poids de Pz, pour une durée de 15 jours sous pression de $CO_2$ en absence d'oxygène dans la phase de chargement. Le taux de dégradation relatif est calculé par le rapport entre le taux de dégradation des amines de la solution absorbante divisé par celui de la solution absorbante K dans les mêmes conditions expérimentales.

Le taux de dégradation (TD) en amines est calculé par l'équation ci-dessous :

Math 1

$$TD(\%) = \frac{[A]m_{final} - [A]^\circ m_{initial}}{[A]^\circ m_{initial}}$$

Où :

[A] est la concentration totale d'amines dans la solution dégradée,
[A]° est la concentration totale d'amine dans la solution non dégradée, et
$m_{initial}$ et $m_{final}$ les masses de solution avant et après le test de dégradation.

Les concentrations [A] et [A]° sont déterminées par chromatographie en phase gaz.

Table 6

| Solution absorbante | Concentrations en amines (%poids) de la solution absorbante (complément en eau) | TD relatif |
|---|---|---|
| **B** | 27 % PMDPTA + 13 % MDEA + 5 % Pz | 1 |
| N | 27 % TMDPTA + 13 % MDEA + 5 % Pz | 1,3 |
| F | 50 % PMDETA | 6 |
| M | 50 % TMDPTA | 6,3 |
| K | 39 % MDEA + 6 % Pz | **1** |

Le tableau 7 ci-dessous donne le taux de dégradation TD relatif, pour une durée de 15 jours sous pression de $CO_2$ en présence d'oxygène dans la phase de chargement de saturation, la pression partielle d'oxygène étant maintenue à 0,02 MPa pendant 3 jours.

Tableau 7

| Solution absorbante | [PMDPTA] (%poids) | [MDEA] (%poids) | [Pz] (%poids) | TD relatif |
|---|---|---|---|---|
| **B** | 27 | 13 | 5 | 0,8 |
| K | 0 | 39 | 6 | 1 |

Cet exemple, d'après le Tableau 6, montre que les polyamines décrites dans l'art antérieur ne sont pas

équivalentes en terme de stabilité chimique par rapport aux solutions de référence et aux solutions mises en œuvre.

La solution absorbante mise en œuvre présente une stabilité chimique sous pression de $CO_2$ et en l'absence d'oxygène comparable à celle d'une solution de référence, contrairement à des solutions de polyamines selon l'art antérieur.

Par ailleurs, la solution absorbante mise en œuvre présente une résistance à l'oxygène accrue par rapport à la solution de référence K, d'après le Tableau 7.

Ceci est particulièrement intéressant pour les unités d'amine de traitement de gaz de synthèse (syngas) et de gaz naturel qui se prémunissent généralement de la dégradation par l'oxygène par des précautions particulières, ou dans le cas du captage du $CO_2$ en post-combustion, ou des applications de décarbonatation en traitement de biogaz issus de la fermentation de biogaz pouvant contenir plusieurs dixièmes à plusieurs pourcents volume d'oxygène.

**Exemple 4** : **corrosivité de solutions absorbantes**

La résistance à la corrosion des métallurgies utilisées dans les procédés est un point important à vérifier lors de l'introduction de nouvelles technologies.

L'étude de la corrosivité de solutions absorbantes a été menée par des essais en autoclave dans des conditions plus sévères que celles de l'application. Les résultats ont pu être comparés à des essais menés sur différentes solutions absorbantes de référence : une solution de MDEA (solution J), une solution comportant un mélange de MDEA et de Pz (solution L), et une solution aqueuse de DEA (40% poids de DEA et 60% poids d'eau).

Comme il est connu que la corrosivité des solutions d'amine est supérieure en présence de produits de dégradation, une première phase a consisté à dégrader les solutions A et B à 140°C sous 3,5 MPa de $CO_2$ pendant une semaine.

Ces solutions dégradées ont ensuite été utilisées pour réaliser des essais de corrosion sur des coupons d'acier au carbone AISI 1020 et d'acier inoxydable AISI 316L dont les compositions chimiques sont données dans le Tableau 8 ci-dessous (valeurs données en % massique). Le fer, non exprimé dans le tableau 1, est l'élément majoritaire pour tous ces alliages.

Tableau 8

| | Fe | Cr | Ni | Mo | C | Mn | Si | S |
|---|---|---|---|---|---|---|---|---|
| AISI 1020 | bal. | 0,01 | 0,01 | <0,005 | 0,17 | 0,75 | 0,01 | 0,003 |
| AISI 316L | bal. | 16,86 | 10,30 | 2,18 | 0,02 | 1,34 | 0,45 | 0,002 |

Un premier essai a été réalisé à 110°C sous 3,5 MPa de $CO_2$ pour représenter la solution chargée dans les conditions de température et de taux de charge en $CO_2$ représentatives de conditions extrêmes que l'on peut rencontrer entre le fond de l'absorbeur et l'entrée du régénérateur.

Un deuxième essai a été réalisé, après extraction (par stripage) du $CO_2$ de la solution précédente, à 135°C sous azote, afin de représenter la condition de la solution absorbante en sortie de régénérateur (solution régénérée à un taux de charge inférieur à 0,1 mole/mole).

Pour chaque essai, deux coupons d'acier au carbone et deux coupons d'acier inoxydables sont placés sur un montage en rotation (vitesse périphérique proche de 0.4 m/s). Ces coupons se présentent sous forme de plaquette de 26 mm de côté et de 1 mm d'épaisseur. Avant chaque essai, chaque échantillon est poli au papier abrasif grade 600, puis soigneusement dégraissé dans l'éthanol, et rincé à l'eau déionisée, et pesé.

En fin d'essai, un nettoyage de surface adéquat est mené sur chaque échantillon avant une pesée, afin d'éliminer les dépôts de produit de corrosion, en suivant la méthode décrite dans le document ASTM G1. La vitesse de corrosion est calculée à partir de la variation de masse et est exprimée en $\mu$m/an.

Les vitesses de corrosion obtenues lors de ces essais sont données dans le Tableau 13 (données du premier essai) et le Tableau 14 (données du deuxième essai) ci-dessous et sont comparées à celles obtenues lors d'essais similaires menés dans la solution J et la solution L.

Le Tableau 9 présente les vitesses de corrosion ($\mu$m/an) mesurées après 4 semaines d'essai en condition riche chargée (saturée sous 3,5 MPa de $CO_2$) et à 110°C.

Le Tableau 10 présente les vitesses de corrosion ($\mu$m/an) mesurées après 4 semaines d'essai en condition pauvre taux de charge inférieur à 0,1 mol/mol) et à 135°C (solutions A et B) ou 120°C (solutions de référence).

Il s'avère que les solutions absorbantes mises en œuvre sont moins corrosives que les solutions de référence.

Tableau 9

| Solution absorbante | Concentrations en amines (%poids) de la solution absorbante (complément en eau) | Vitesse de corrosion sur Acier Carbone AISI 1020 (μm/an) | Vitesse de corrosion sur Acier inoxydable AISI 316L (μm/an) |
|---|---|---|---|
| **A** | 22 % PMDPTA + 28 % MDEA | 6 | <1 |
| **B** | 27 % PMDPTA + 13 % MDEA + 5 % Pz | 10 | <2 |
| J | 45 % MDEA | 21 | <5 |
| L | 40 % MDEA+ 3,3 % Pz | 12 | <5 |
| X | 40 % DEA | 145 | 15 |

Tableau 10

| Solution absorbante | Concentrations en amines (%poids) de la solution absorbante (complément en eau) | Vitesse de corrosion sur Acier Carbone AISI 1020 (μm/an) | Vitesse de corrosion sur Acier inoxydable AISI 316L (μm/an) |
|---|---|---|---|
| **A** | 22 % PMDPTA + 28 % MDEA | <2 | <1 |
| **B** | 27 % PMDPTA + 13 % MDEA + 5 % Pz | <1 | <2 |
| J | 45 % MDEA | 11 | <5 |
| L | 40 % MDEA+ 3,3 % Pz | <5 | <5 |
| X | 40 % DEA | 2040 | 15 |

**Exemple 5 : moussage de solutions absorbantes saturées en hydrocarbures ou contenant des composés issus de la dégradation des amines**

Le test de moussage réalisé permet d'évaluer le pouvoir moussant de solutions absorbantes. Le test de moussage consiste à déterminer la hauteur de mousse générée suite à l'agitation de la solution, celui-ci est exprimé en pourcentage par rapport à la hauteur initiale de la solution, en fonction du temps.

Il est réalisé à 20°C sur un volume de 50 ml de solution, placé dans un bécher de 250 ml, et agité à l'aide d'un agitateur à 5 pales pendant 4minutes à 1200 t/min.

Dès l'arrêt de l'agitation, la hauteur de mousse générée au-dessus de la surface de la solution est mesurée immédiatement (t0) et à 30 secondes et est exprimée en pourcentage de la hauteur initiale de liquide. L'incertitude de la mesure est évaluée à 2,5% de la hauteur initiale.

L'étude est menée sur les solutions absorbantes J et K de référence, sur les solutions absorbantes A et B.

Sur les solutions absorbantes A et J, on observe l'effet sur le moussage de certains produits anioniques généralement issus de la dégradation oxydante des amines. Afin de représenter la composition d'une solution vieillie, on a rajouté aux solutions absorbantes A et J différents acides carboxyliques dans les quantités suivantes exprimées en ppm poids par rapport à la solution absorbante fraîche soit 3 000 ppm poids d'acide glycolique, 500 ppm poids d'acide oxalique, 40 000 ppm poids d'acide formique et 6 000 ppm poids d'acide acétique soit une quantité totale d'acide carboxyliques ajoutés représentant 4,95% de la masse de solution absorbante fraîche.

Pour observer leur pouvoir moussant sur des solutions absorbantes de gaz acide dans des gaz contenant des hydrocarbures, les solutions absorbantes B et K activées avec de la Pz sont saturées avec du n-hexane ou du toluène par mise en contact de la solution absorbante avec quelques millilitres de ces composés à température ambiante. Les solutions B et K saturées en hydrocarbures sont ensuite récupérées par décantation avant d'être soumises au test de moussage.

Enfin, on compare le pouvoir moussant de la solution absorbante B avec la solution absorbante K de référence et la solution absorbante G selon l'art antérieur, dégradées dans les conditions décrites en l'absence d'oxygène dans l'exemple 7 et dans lesquelles on a rajouté un mélange d'acides carboxyliques représentant 4,95% de la masse de la solution absorbante dégradée dont la composition est indiquée plus haut.

Le Tableau 11 présente la hauteur de mousse, exprimée en pourcents de la hauteur avant agitation, observée à l'arrêt de l'agitation et après 30 secondes dans les solutions absorbantes A et J en présence d'acides carboxyliques.

Tableau 11

| Solution absorbante | Concentrations en amines (% poids) de la solution absorbante (complément en eau) | Hauteur de mousse générée (%) après agitation en fonction du temps (s) | |
|---|---|---|---|
| | | t = 0 | t = 30 |
| J + 4,95 % acides | 45 % MDEA | 7,5 | 0 |
| **A** + 4,95 % acides | 22 % PMDPTA + 28 % MDEA | < 2,5 | 0 |

Il s'avère que dans les conditions du test, en présence de composés acides représentatifs d'une dégradation oxydante, la solution absorbante A ne présente pas d'effet moussant significatif en présence tandis que la solution absorbante J de référence présente dans les mêmes conditions d'agitation une tendance au moussage.

Le Tableau 12 présente la hauteur de mousse, exprimée en pourcents de la hauteur avant agitation observée à l'arrêt de l'agitation et après 30 secondes dans les solutions absorbantes B et K saturées en n-hexane ou en toluène.

Tableau 12

| Solution absorbante | Concentrations en amines (%poids) de la solution absorbante (complément en eau) | Hauteur de mousse générée (%) après agitation en fonction du temps (s) | |
|---|---|---|---|
| | | t = 0 | t = 30 |
| K saturée en n-hexane | 39 % MDEA + 6 % Pz | 9,5 | 2,4 |
| **B** saturée en n-hexane | 27 % PMDPTA + 13 % MDEA + 5 % Pz | 2,4 | 2,4 |
| K saturée en toluène | 39 % MDEA + 6 % Pz | 12 | 2,4 |
| **B** saturée en toluène | 27 % PMDPTA + 13 % MDEA + 5 % Pz | 7 | 1,2 |

Il s'avère que dans les conditions du test, la solution B saturée en n-hexane ne présente pas d'effet moussant significatif tandis que la solution absorbante de référence K à base de MDEA et de Pz saturée en n-hexane présente dans les mêmes conditions d'agitation une tendance au moussage.

Il s'avère également qu'en présence de toluène, la solution absorbante B présente un facteur de moussage quasiment divisé par deux par rapport à la solution de référence K à base de MDEA et de Pz.

Cet effet notable permet par exemple d'envisager avec l'emploi de la solution absorbante selon l'invention un retard à l'engorgement par rapport à la solution absorbante de référence sur une colonne d'absorption et toute chose égale par ailleurs une augmentation de capacité d'une unité de traitement de gaz existante, c'est-à-dire une augmentation du débit de gaz acide pouvant être traité pour un débit de solvant donné.

Pour la construction de nouvelles installations de traitement de gaz acides contenant des hydrocarbures comme dans le cas gaz naturel et mettant en œuvre la solution absorbante selon l'invention, on peut également envisager une réduction du diamètre des colonnes d'absorption et donc le coût de ces dernières par rapport aux règles de dimensionnement habituelles pour la solution absorbante de référence, pour un débit de gaz et de solution absorbante donnés.

Le Tableau 13 présente la hauteur de mousse, exprimée en pourcents de la hauteur avant agitation observée à l'arrêt de l'agitation et après 30 secondes dans les solutions absorbantes B, G et K dégradées dans les conditions de dégradation en l'absence d'oxygène, définies à l'exemple 7, et dans lesquelles ont été rajoutées un mélange d'acides carboxyliques représentant 4,95 % en poids de la solution dégradée et dont la composition est décrite plus haut.

Tableau 13

| Solution absorbante | Concentrations en amines (%poids) de la solution absorbante (complément en eau) | Hauteur de mousse générée (%) après agitation en fonction du temps (s) | |
|---|---|---|---|
| | | t = 0 | t = 30 |
| K dégradée + 4,95 % acides | 39 % MDEA + 6 % Pz | 21 | 17 |
| **B** dégradée + 4,95 % acides | 27 % PMDPTA + 13 % MDEA + 5 % Pz | 10 | 10 |
| G dégradée + 4,95 % acides | 30 % PMDPTA + 10 % MDEA + 5 % Pz | 7 | 19 |

Il s'avère que dans les conditions du test, la solution dégradée à partir de la solution B présente un effet moussant

réduit d'un facteur 2 par rapport à la solution absorbante dégradée dans les mêmes conditions à partir de la solution K de référence à base de MDEA et de Pz. De manière étonnante, on constate également que la solution absorbante dégradée à partir de la solution absorbante B contenant 27% de PMDPTA présente après 30 secondes une tendance au moussage également réduite d'un facteur 2 par rapport à la solution absorbante dégradée à partir de la solution absorbante G selon l'art antérieur contenant 30% de PMDPTA, qui présente un effet retard dans l'apparition de la mousse.

**Revendications**

**1.** Procédé d'élimination des composés acides contenus dans un effluent gazeux dans lequel on effectue une étape d'absorption des composés acides par mise en contact de l'effluent gazeux avec une solution absorbante comportant :

- de l'eau ;
- entre 20% et 28% poids de pentaméthyldipropylènetriamine ;
- entre 5% et 35% poids de N-méthyldiéthanolamine ;
- entre 5 et 50% poids d'au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, le carbonate de propylène, le tributylphosphate.

**2.** Procédé selon la revendication 1, dans lequel la solution absorbante comporte entre 10 % et 30 % poids de N-méthyldiéthanolamine, et de préférence entre 42 % et 70 % poids d'eau.

**3.** Procédé selon la revendication 1, dans lequel la solution absorbante comporte entre 37 % et 75 % poids d'eau.

**4.** Procédé selon la revendication 1, dans lequel la solution absorbante comporte :

- entre 5 % et 20 % poids de N-méthyldiéthanolamine ; et
- entre 0,5 % et 20 % poids d'au moins un composé activateur comprenant une fonction amine primaire ou secondaire choisi dans le groupe constitué par :
  - la pipérazine ;
  - la 1-méthyl-pipérazine ;
  - l'homopipérazine ;
  - la N-(2-hydroxyéthyl)pipérazine ;
  - la 3-(méthylamino)propylamine ;
  - la N,N'-diméthyl-1,6-hexanediamine ;
  - la N-méthyl-1,6-hexanediamine ;
  - la N,N',N'-triméthyl-1,6-hexanediamine ;
  - le 2-amino-2-méthyl-1-propanol.

**5.** Procédé selon la revendication 4, dans lequel la solution absorbante comporte entre 5 % et 15 % poids de N-méthyldiéthanolamine, et de préférence entre 10 % et 15 % de N-méthyldiéthanolamine.

**6.** Procédé selon l'une des revendications 4 à 5, dans lequel le composé activateur est la pipérazine.

**7.** Procédé selon l'une des revendications 4 à 6, dans lequel la solution absorbante comporte entre 0,5 % et 10 % poids dudit au moins un composé activateur, de préférence entre 0,5 % et 6 % poids dudit au moins un composé activateur, et encore plus préférentiellement entre 1% et 6 % poids dudit au moins un composé activateur.

**8.** Procédé selon l'une des revendications précédentes, dans lequel la solution absorbante ne comporte pas d'additif anti-moussage.

**9.** Procédé selon l'une des revendications précédentes, dans lequel l'étape d'absorption des composés acides est réalisée à une pression comprise entre 0,1 MPa et 20 MPa, et à une température comprise entre 20°C et 100°C.

**10.** Procédé selon l'une des revendications précédentes, dans lequel on obtient une solution absorbante chargée en composés acides après l'étape d'absorption, et on effectue au moins une étape de régénération de ladite solution absorbante chargée en composés acides à une pression comprise entre 0,1 MPa et 1 MPa, de préférence comprise entre 0,1 MPa et 0,5 MPa, et à une température comprise entre 100°C et 180°C, de préférence comprise entre 110°C et 140°C.

**11.** Procédé selon la revendication 10, dans lequel la solution absorbante est monophasique lors de l'étape d'absorption au sein d'une colonne d'absorption et jusqu'à au moins l'entrée dans une colonne de régénération dans laquelle est effectuée l'étape de régénération, et a de préférence une température inférieure ou égale à 110°C dans la colonne d'absorption et jusqu'à au moins l'entrée dans la colonne de régénération.

**12.** Procédé selon l'une des revendications précédentes, dans lequel l'effluent gazeux est choisi parmi le gaz naturel, le gaz de synthèse, les fumées de combustion, les gaz de raffinerie, les gaz acides issus d'une unité aux amines, les gaz de queue issus d'une unité de conversion de l'$H_2S$ en soufre par procédé Claus, les gaz issus de fermentation de biomasse, les gaz de cimenterie, les fumées d'incinérateur.

**13.** Procédé d'élimination sélective de l'$H_2S$ par rapport au $CO_2$ d'un effluent gazeux comportant de l'$H_2S$ et du $CO_2$, selon l'une des revendications précédentes, de préférence d'élimination sélective de l'$H_2S$ par rapport au $CO_2$ du gaz naturel.

**14.** Procédé de décarbonatation d'un biogaz selon l'une des revendications 1 à 12.

**Patentansprüche**

**1.** Verfahren zur Beseitigung von in einem Abgas enthaltenen sauren Verbindungen, wobei man einen Schritt der Absorption der sauren Verbindungen durch Inkontaktbringen des Abgases mit einer Absorptionslösung durchführt, die Folgendes umfasst:

- Wasser,
- zwischen 20 Gew.-% und 28 Gew.-% Pentamethyldipropylentriamin,
- zwischen 5 Gew.-% und 35 Gew.-% N-Methyldiethanolamin,
- zwischen 5 Gew.-% und 50 Gew.-% mindestens eines physikalischen Lösungsmittels, ausgewählt aus der Gruppe, bestehend aus Methanol, Ethanol, 2-Ethoxyethanol, Triethylenglykoldimethylether, Tetraethylenglykoldimethylether, Pentaethylenglykoldimethylether, Hexaethylenglykoldimethylether, Heptaethylenglykoldimethylether, Octaethylenglykoldimethylether, Diethylenglykolbutoxyacetat, Glycerintriacetat, Sulfolan, N-Methylpyrrolidon, N-Methylmorpholin-3-on, N,N-Dimethylformamid, N-Formylmorpholin, N,N-Dimethylimidazolidin-2-on, N-Methylimidazol, Ethylenglykol, Diethylenglykol, Triethylenglykol, Thiodiglykol, Propylencarbonat, Tributylphosphat.

**2.** Verfahren nach Anspruch 1, wobei die Absorptionslösung zwischen 10 Gew.-% und 30 Gew.-% N-Methyldiethanolamin und vorzugsweise zwischen 42 Gew.-% und 70 Gew.-% Wasser umfasst.

**3.** Verfahren nach Anspruch 1, wobei die Absorptionslösung zwischen 37 Gew.-% und 75 Gew.-% Wasser umfasst.

**4.** Verfahren nach Anspruch 1, wobei die Absorptionslösung Folgendes enthält:

- zwischen 5 Gew.-% und 20 Gew.-% N-Methyldiethanolamin und
- zwischen 0,5 Gew.-% und 20 Gew.-% mindestens einer Aktivatorverbindung, die eine primäre oder sekundäre Aminfunktion umfasst, ausgewählt aus der Gruppe, bestehend aus:
    - Piperazin,
    - 1-Methylpiperazin,
    - Homopiperazin,
    - N-(2-Hydroxyethyl)piperazin,
    - 3-(Methylamino)propylamin,
    - N,N'-Dimethyl-1,6-hexandiamin,
    - N-Methyl-1,6-hexandiamin,

- N,N',N'-Trimethyl-1,6-hexandiamin,
- 2-Amino-2-methyl-1-propanol.

**5.** Verfahren nach Anspruch 4, wobei die Absorptionslösung zwischen 5 Gew.-% und 15 Gew.-% N-Methyldiethanolamin und vorzugsweise zwischen 10 Gew.-% und 15 Gew.-% N-Methyldiethanolamin umfasst.

**6.** Verfahren nach einem der Ansprüche 4 bis 5, wobei die Aktivatorverbindung Piperazin ist.

**7.** Verfahren nach einem der Ansprüche 4 bis 6, wobei die Absorptionslösung zwischen 0,5 Gew.-% und 10 Gew.-% der mindestens einen Aktivatorverbindung, vorzugsweise zwischen 0,5 Gew.-% und 6 Gew.-% der mindestens einen Aktivatorverbindung und noch stärker bevorzugt zwischen 1 Gew.-% und 6 Gew.-% der mindestens einen Aktivatorverbindung umfasst.

**8.** Verfahren nach einem der vorhergehenden Ansprüche, wobei die Absorptionslösung kein Anti-Schaum-Additiv enthält.

**9.** Verfahren nach einem der vorhergehenden Ansprüche, wobei der Schritt der Absorption der sauren Verbindungen bei einem Druck zwischen 0,1 MPa und 20 MPa und bei einer Temperatur zwischen 20 °C und 100 °C durchgeführt wird.

**10.** Verfahren nach einem der vorhergehenden Ansprüche, wobei man nach dem Absorptionsschritt eine mit sauren Verbindungen beladene Absorptionslösung erhält und man mindestens einen Schritt der Regeneration der mit sauren Verbindungen beladenen Absorptionslösung bei einem Druck zwischen 0,1 MPa und 1 MPa, vorzugsweise zwischen 0,1 MPa und 0,5 MPa, und bei einer Temperatur zwischen 100 °C und 180 °C, vorzugsweise zwischen 110 °C und 140 °C, durchführt.

**11.** Verfahren nach Anspruch 10, wobei die Absorptionslösung während des Absorptionsschritts im Inneren einer Absorptionskolonne und mindestens bis zum Einlass in eine Regenerationskolonne, in der der Regenerationsschritt durchgeführt wird, monophasisch ist und vorzugsweise eine Temperatur von weniger als oder gleich 110 °C in der Absorptionskolonne und mindestens bis zum Einlass in die Regenerationskolonne hat.

**12.** Verfahren nach einem der vorhergehenden Ansprüche, wobei das Abgas aus Erdgas, Synthesegas, Verbrennungsrauchgasen, Raffineriegasen, aus einer Aminanlage stammenden sauren Gasen, aus einer Anlage zur Umwandlung von $H_2S$ in Schwefel durch das Claus-Verfahren stammenden Endgasen, aus der Biomassegärung stammenden Gasen, Gasen aus Zementwerken, Rauchgasen aus Verbrennungsanlagen ausgewählt ist.

**13.** Verfahren zum selektiven Beseitigen von $H_2S$ gegenüber $CO_2$ aus einem $H_2S$ und $CO_2$ umfassenden Abgas nach einem der vorhergehenden Ansprüche, vorzugsweise selektive Beseitigung von $H_2S$ gegenüber $CO_2$ aus Erdgas.

**14.** Verfahren zur Entkarbonatisierung eines Biogases nach einem der Ansprüche 1 bis 12.

## Claims

**1.** Process for the removal of the acid compounds contained in a gaseous effluent, in which a step of absorption of the acid compounds is carried out by bringing the gaseous effluent into contact with an absorbent solution comprising:

- water;
- between 20% and 28% by weight of pentamethyldipropylenetriamine;
- between 5% and 35% by weight of N-methyldiethanolamine;
- between 5% and 50% by weight of at least one physical solvent chosen from the group consisting of methanol, ethanol, 2-ethoxyethanol, triethylene glycol dimethyl ether, tetraethylene glycol dimethyl ether, pentaethylene glycol dimethyl ether, hexaethylene glycol dimethyl ether, heptaethylene glycol dimethyl ether, octaethylene glycol dimethyl ether, diethylene glycol butoxyacetate, glyceryl triacetate, sulfolane, N-methylpyrrolidone, N-methylmorpholin-3-one, N,N-dimethylformamide, N-formylmorpholine, N,N-dimethylimidazolidin-2-one, N-methylimidazole, ethylene glycol, diethylene glycol, triethylene glycol, thiodiglycol, propylene carbonate, tributyl phosphate.

**2.** Process according to Claim 1, in which the absorbent solution comprises between 10% and 30% by weight of N-methyldiethanolamine, and preferably between 42% and 70% by weight of water.

**3.** Process according to Claim 1, in which the absorbent solution comprises between 37% and 75% by weight of water.

**4.** Process according to Claim 1, in which the absorbent solution comprises:

- between 5% and 20% by weight of N-methyldiethanolamine; and
- between 0.5% and 20% by weight of at least one activating compound comprising a primary or secondary amine function chosen from the group consisting of:

    - piperazine;
    - 1-methylpiperazine;
    - homopiperazine;
    - N-(2-hydroxyethyl)piperazine;
    - 3-(methylamino)propylamine;
    - N,N'-dimethyl-1,6-hexanediamine;
    - N-methyl-1,6-hexanediamine;
    - N,N',N'-trimethyl-1,6-hexanediamine;
    - 2-amino-2-methyl-1-propanol.

**5.** Process according to Claim 4, in which the absorbent solution comprises between 5% and 15% by weight of N-methyldiethanolamine, and preferably between 10% and 15% of N-methyldiethanolamine.

**6.** Process according to either of Claims 4 and 5, in which the activating compound is piperazine.

**7.** Process according to one of Claims 4 to 6, in which the absorbent solution comprises between 0.5% and 10% by weight of said at least one activating compound, preferably between 0.5% and 6% by weight of said at least one activating compound, and more preferentially still between 1% and 6% by weight of said at least one activating compound.

**8.** Process according to one of the preceding claims, in which the absorbent solution does not comprise an anti-foaming additive.

**9.** Process according to one of the preceding claims, in which the step of absorption of the acid compounds is carried out at a pressure of between 0.1 MPa and 20 MPa, and at a temperature of between 20°C and 100°C.

**10.** Process according to one of the preceding claims, in which an absorbent solution loaded with acid compounds is obtained after the absorption step, and at least one step of regeneration of said absorbent solution loaded with acid compounds is carried out at a pressure of between 0.1 MPa and 1 MPa, preferably of between 0.1 MPa and 0.5 MPa, and at a temperature of between 100°C and 180°C, preferably of between 110°C and 140°C.

**11.** Process according to Claim 10, in which the absorbent solution is a single-phase solution during the absorption step within an absorption column and up to at least the entry into a regeneration column in which the regeneration step is carried out, and preferably has a temperature of less than or equal to 110°C in the absorption column and up to at least the entry into the regeneration column.

**12.** Process according to one of the preceding claims, in which the gaseous effluent is chosen from natural gas, synthesis gas, combustion flue gases, refinery gases, acid gases resulting from an amine unit, tail gases resulting from a unit for the conversion of $H_2S$ to give sulfur by the Claus process, gases resulting from biomass fermentation, gases from cement works or incinerator flue gases.

**13.** Process for the selective removal of $H_2S$ with respect to $CO_2$ from a gaseous effluent comprising $H_2S$ and $CO_2$ according to one of the preceding claims, preferably for the selective removal of $H_2S$ with respect to $CO_2$ from natural gas.

**14.** Process for the decarbonization of a biogas according to one of Claims 1 to 12.

Fig. 1

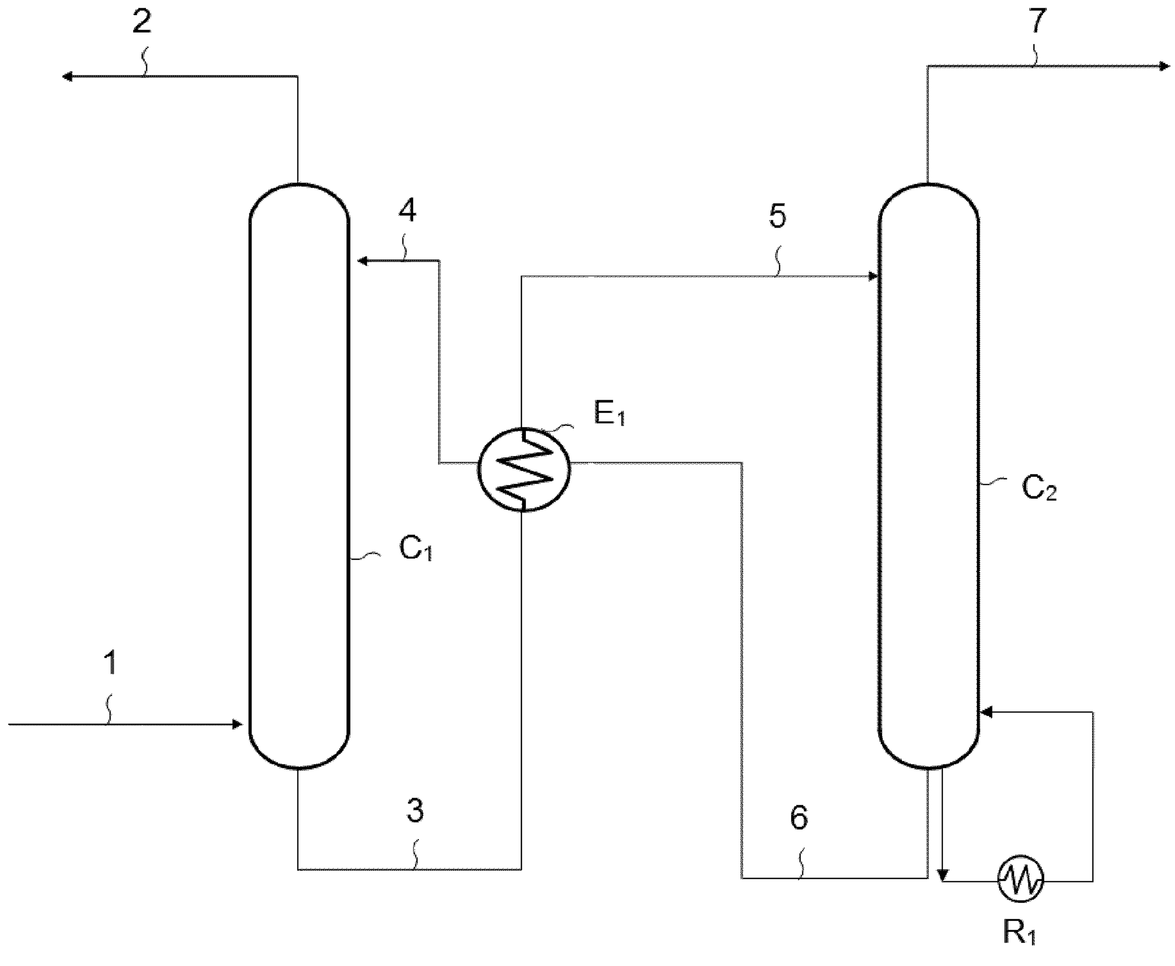

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6852144 B
- US 6267939 B
- WO 09156273 A
- FR 2877858
- FR 2895273
- FR 2900843
- FR 2898284
- FR 2900842
- FR 2986441
- FR 2986442
- FR 3014101
- WO 2015177333 A
- WO 04082809 A
- EP 4010106 A
- WO 09156273 A2